# EUROPEAN PATENT APPLICATION

(11) **EP 4 819 696 A1**
(43) Date of publication of application: **07.10.2026**
(21) Application number: 24898234.0
(22) Date of filing: 29.11.2024
(51) Int. Cl.: H04W 48/14, H04W 48/02, H04W 24/08, H04W 76/27, H04W 76/34, H04W 72/21

(54) **METHOD AND DEVICE FOR TRANSMISSION AND RECEPTION OF SYNCHRONIZATION SIGNALS IN WIRELESS COMMUNICATION SYSTEM**

(30) Priority: 01.12.2023 US 202363604901 P
(71) Applicant: LG Electronics Inc., Yeongdeungpo-gu Seoul 07336 (KR)
(72) Inventor: LEE, Youngdae, Seoul 06772 (KR); KIM, Seonwook, Seoul 06772 (KR); YANG, Suckchel, Seoul 06772 (KR); MYUNG, Sechang, Seoul 06772 (KR)
(74) Representative: Plasseraud IP
(86) International application number: PCT/KR2024/019362
(87) International publication number: WO 2025/116641

(57) **Abstract**

A method and a device for performing communication in a Wireless communication system are disclosed. The method performed by a terminal, according to one embodiment of the present disclosure, comprises the steps of: receiving, from a base station, first configuration information related to an on-demand synchronization signal for a specific cell; and releasing or inactivating the specific cell on the basis that the terminal is in a connected mode and a measurement value of the on-demand synchronization signal is less than or equal to the threshold value, Wherein the specific cell can be determined, by means of the terminal, to be barred on the basis that the terminal is in an idle mode or an inactive mode and the measurement value of the on-demand synchronization signal is less than or equal to the threshold value.

## Description

### [TECHNICAL FIELD]

The present disclosure relates to a wireless communication system, and more specifically, to a method and apparatus for transmitting and receiving a synchronization signal in a wireless communication system.

### [BACKGROUND]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

### [Disclosure]

### [Technical Problem]

The technical problem of the present disclosure is to provide a method and apparatus for transmitting and receiving a synchronization signal in a wireless communication system.

The technical problem of the present disclosure is to provide a method and apparatus for transmitting and receiving an on-demand synchronization signal block (SSB) in a wireless communication system where network energy saving (NES) is applied.

The technical problems to be achieved by the present disclosure are not limited to the above-described technical objects, and other technical problems which are not described herein will be clearly understood by those skilled in the pertinent art from the following description.

### [Technical Solution]

A method according to one embodiment of the present disclosure may include receiving, by a user equipment (UE) from a base station, first configuration information related to an on-demand synchronization signal for a specific cell; and based on the UE being in a connected mode and a measurement value of an on-demand synchronization signal being below a threshold value, releasing or deactivating, by the UE, the specific cell, and based on the UE being in idle mode or inactive mode and the measurement value of the on-demand synchronization signal being below the threshold value, the specific cell may be determined by the UE to be barred.

A method according to another embodiment of the present disclosure may include transmitting, by a base station to a user equipment (UE), first configuration information related to an on-demand synchronization signal for a specific cell; receiving, by the base station from the UE, information requesting the on-demand synchronization signal; and transmitting, by the base station to the UE, the on-demand synchronization signal based on the information requesting the on-demand synchronization signal and the first configuration information, and based on the UE being in connected mode and a measurement value of the on-demand synchronization signal being below a threshold, the specific cell may be released or deactivated, and based on the UE being in idle mode or inactive mode and the measurement value of the on-demand synchronization signal being below the threshold, the specific cell may be determined to be barred.

### [Technical Effects]

According to various embodiments of the present disclosure, a method and apparatus for transmitting and receiving synchronous signals in a wireless communication system may be provided.

According to various embodiments of the present disclosure, a method and apparatus for transmitting and receiving on-demand SSB in a wireless communication system to which network energy saving is applied may be provided.

According to various embodiments of the present disclosure, UE/base station energy equipment resulting from on-demand SSB transmission and reception may be reduced by controlling the cell state based on the on-demand SSB measurement results.

Effects achievable by the present disclosure are not limited to the above-described effects, and other effects which are not described herein may be clearly understood by those skilled in the pertinent art from the following description.

### [BRIEF DESCRIPTION OF THE DRAWINGS]

Accompanying drawings included as part of detailed description for understanding the present disclosure provide embodiments of the present disclosure and describe technical features of the present disclosure with detailed description.
FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 is a diagram illustrating the operation of transmission and reception of an on-demand SSB.
FIG. 8 is a flowchart illustrating the operation of a terminal in a wireless communication system according to one embodiment of the present disclosure.
FIG. 9 is a flowchart illustrating the operation of a base station in a wireless communication system according to one embodiment of the present disclosure.
FIG. 10 illustrates a block diagram of a wireless communication device according to one embodiment of the present disclosure.

### [DETAILED DESCRIPTION]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.
- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

### Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

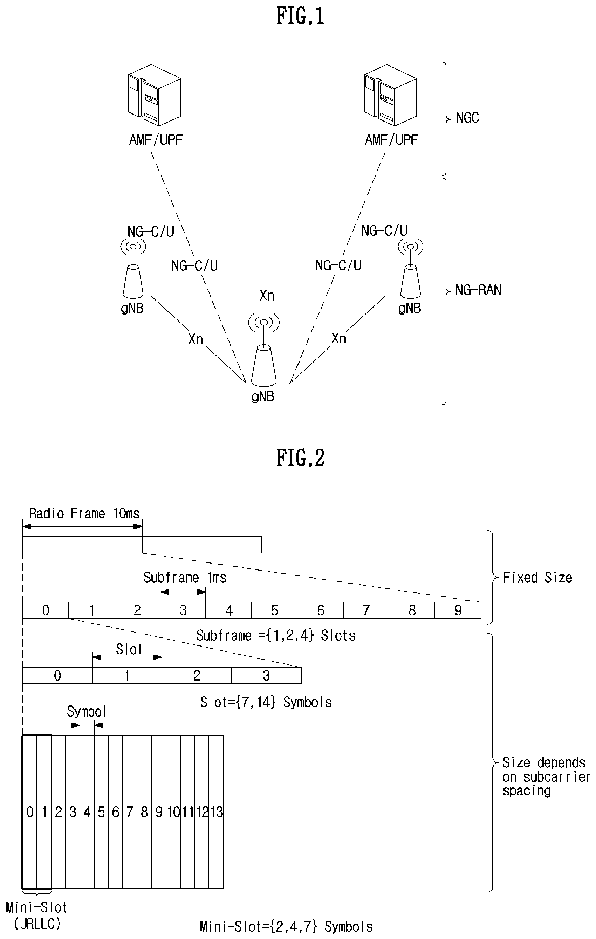

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, µ). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

**[Table 1]**

| µ | Δf=2^{µ}·15 [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of T_{c}=1/(Δfₘₐₓ·N_{f}). Here, Δfₘₐₓ is 480·10³ Hz and N_{f} is 4096. Downlink and uplink transmission is configured (organized) with a radio frame having a duration of T_{f}=1/(ΔfₘₐₓN_{f}/100)·T_{c}=10ms. Here, a radio frame is configured with 10 subframes having a duration of T_{sf}=(ΔfₘₐₓN_{f}/1000)·T_{c}=1ms, respectively. In this case, there may be one set of frames for an uplink and one set of frames for a downlink. In addition, transmission in an uplink frame No. i from a terminal should start earlier by T_{TA}=(N_{TA}+N_{TA,offset})T_{c} than a corresponding downlink frame in a corresponding terminal starts. For a subcarrier spacing configuration µ, slots are numbered in an increasing order of nₛ^{µ}∈{0,..., Nₛₗₒₜ^{subframe,µ}-1} in a subframe and are numbered in an increasing order of n_{s,f}^{µ}∈{0,..., Nₛₗₒₜ^{frame,µ}-1} in a radio frame. One slot is configured with N_{symb}^{slot} consecutive OFDM symbols and N_{symb}^{slot} is determined according to CP. A start of a slot nₛ^{µ} in a subframe is temporally arranged with a start of an OFDM symbol nₛ^{µ}N_{symb}^{slot} in the same subframe. All terminals may not perform transmission and reception at the same time, which means that all OFDM symbols of a downlink slot or an uplink slot may not be used. Table 3 represents the number of OFDM symbols per slot (N_{symb}^{slot}), the number of slots per radio frame (Nₛₗₒₜ^{frame,µ}) and the number of slots per subframe (Nₛₗₒₜ^{subframe,µ}) in a normal CP and Table 4 represents the number of OFDM symbols per slot, the number of slots per radio frame and the number of slots per subframe in an extended CP.

**[Table 3]**

| µ | N_{symb}^{slot} | Nₛₗₒₜ^{frame,µ} | Nₛₗₒₜ^{subframe,µ} |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

**[Table 4]**

| µ | N_{symb}^{slot} | Nₛₗₒₜ^{frame,µ} | Nₛₗₒₜ^{subframe,µ} |
|---|---|---|---|
| 2 | 12 | 40 | 4 |

FIG. 2 is an example on µ=2 (SCS is 60kHz), 1 subframe may include 4 slots referring to Table 3. 1 subframe={ 1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered.

Hereinafter, the physical resources which may be considered in an NR system will be described in detail. First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

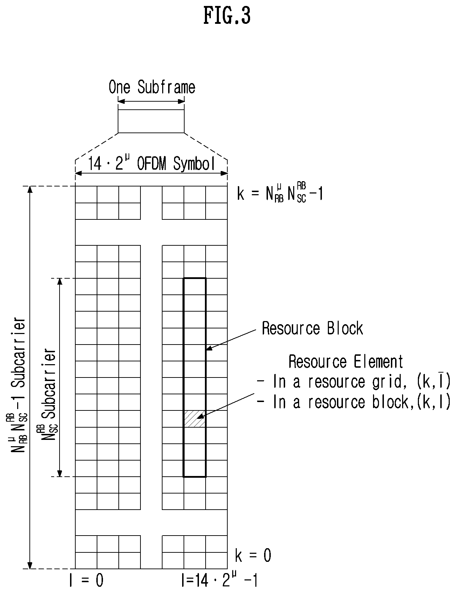

FIG. 3 illustrates a resource grid in a wireless communication system to which the present disclosure may be applied. In reference to FIG. 3, it is illustratively described that a resource grid is configured with N_{RB}^{µ}N_{sc}^{RB} subcarriers in a frequency domain and one subframe is configured with 14·2^{µ} OFDM symbols, but it is not limited thereto. In an NR system, a transmitted signal is described by OFDM symbols of 2^{µ}N_{symb}^{(µ)} and one or more resource grids configured with N_{RB}^{µ}N_{sc}^{RB} subcarriers. Here, N_{RB}^{µ}≤N_{RB}^{max,µ}. The N_{RB}^{max,µ} represents a maximum transmission bandwidth, which may be different between an uplink and a downlink as well as between numerologies. In this case, one resource grid may be configured per µ and antenna port p. Each element of a resource grid for µ and an antenna port p is referred to as a resource element and is uniquely identified by an index pair (k,l').

Here, k=0,...,N_{RB}^{µ}N_{sc}^{RB}-1 is an index in a frequency domain and l'=0,...,2^{µ}N_{symb}^{(µ)}-1 refers to a position of a symbol in a subframe. When referring to a resource element in a slot, an index pair (k,l) is used. Here, l=0,...,N_{symb}^{µ}-1. A resource element (k,l') for µ and an antenna port p corresponds to a complex value, a_{k,l'}^{(p,µ)}. When there is no risk of confusion or when a specific antenna port or numerology is not specified, indexes p and µ may be dropped, whereupon a complex value may be a_{k,l'}^{(p)} or a_{k,l'}. In addition, a resource block (RB) is defined as N_{sc}^{RB}=12 consecutive subcarriers in a frequency domain.

Point A plays a role as a common reference point of a resource block grid and is obtained as follows.
- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
- absoluteFrequencyPointA represents a frequency-position of point A expressed as in ARFCN (absolute radio-frequency channel number).

Common resource blocks are numbered from 0 to the top in a frequency domain for a subcarrier spacing configuration µ. The center of subcarrier 0 of common resource block 0 for a subcarrier spacing configuration µ is identical to 'point A'. A relationship between a common resource block number n_{CRB}^{µ} and a resource element (k,l) for a subcarrier spacing configuration µ in a frequency domain is given as in the following Equation 1. [Equation 1] ${n}_{CRB}^{μ} = \left⌊\frac{k}{{N}_{sc}^{RB}}\right⌋$

In Equation 1, k is defined relatively to point A so that k=0 corresponds to a subcarrier centering in point A. Physical resource blocks are numbered from 0 to N_{BWP,i}^{size,µ}-1 in a bandwidth part (BWP) and i is a number of a BWP. A relationship between a physical resource block n_{PRB} and a common resource block n_{CRB} in BWP i is given by the following Equation 2. [Equation 2] ${n}_{CRB}^{μ} = {n}_{PRB}^{μ} + {N}_{BPW , i}^{start , μ}$

N_{BWP,i}^{start,µ} is a common resource block that a BWP starts relatively to common resource block 0.

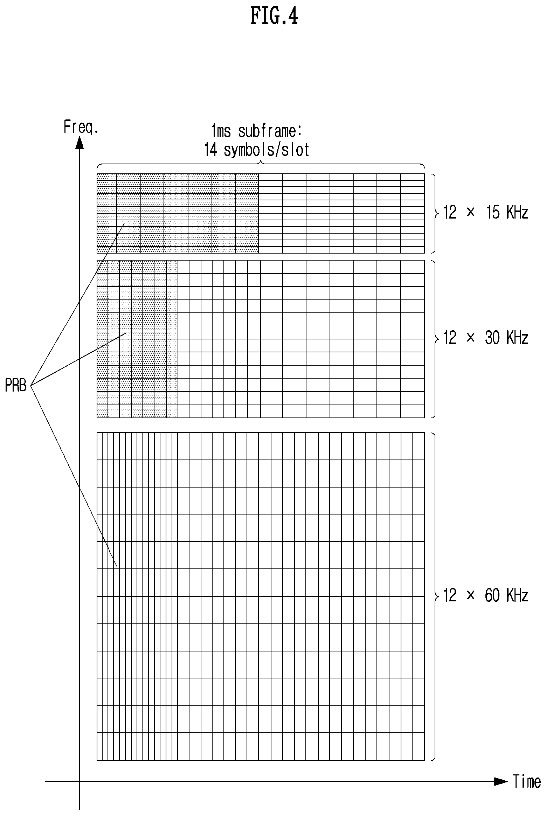

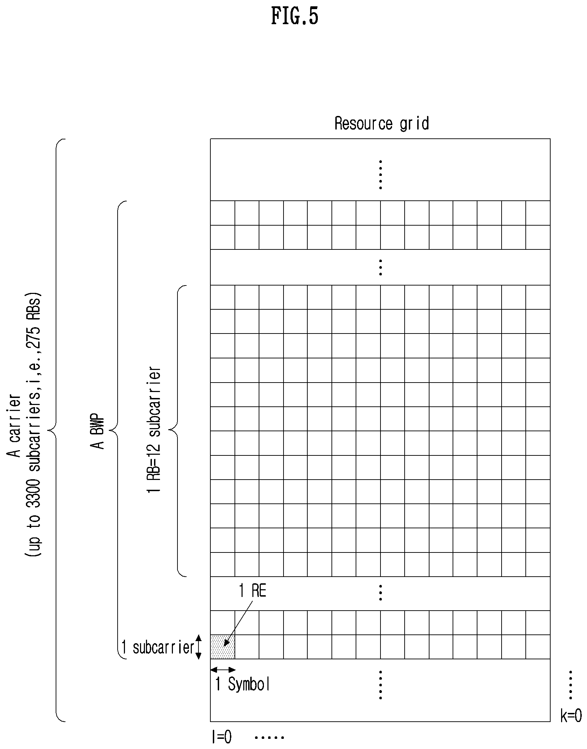

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP.

Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC.

A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

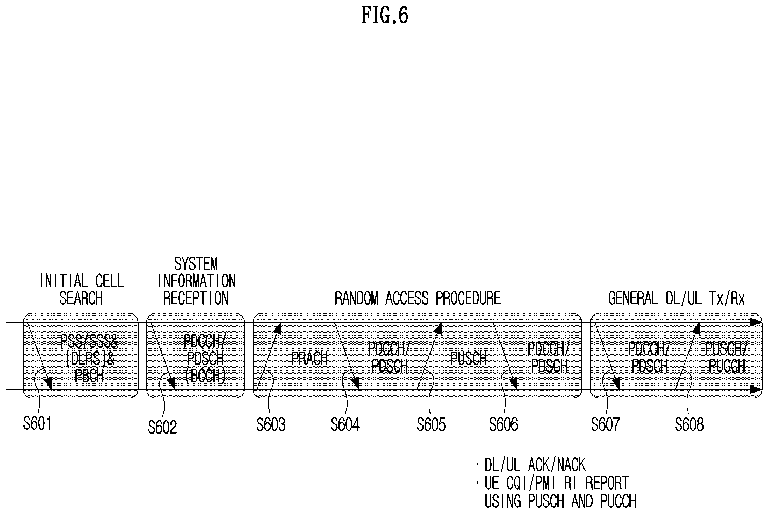

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

**[Table 5]**

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined. DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

### Network energy saving (NES) Method

Energy saving in base stations can contribute to building eco-friendly networks by reducing carbon emissions and reducing operational expenditures (OPEX) for telecommunications companies, which is considered important in wireless communication systems.

In particular, as wireless communication systems become more advanced, they require higher transmission rates, so base stations must be equipped with a larger number of antennas and provide services based on wider bandwidth and frequency bands. This is increasing the proportion of energy costs of base stations in the total OPEX of telecommunications companies. Accordingly, interest in improving energy saving capabilities in terms of base station transmission and reception is increasing, and related technologies are being discussed.

For example, regarding one or more network energy saving technologies in the time, frequency, space and power domains, methods are discussed for achieving more efficient NES operation and finer granularity adaptation related to transmission and/or reception, along with potential UE support/feedback and potential UE support information.

Additionally, SCell operation without SSB for inter-band CA (carrier aggregation) for FR1 and the same location cell is specified, and the UE may measure SSB transmitted from PCell or another SCell if necessary for SCell time/frequency synchronization and L1/L3 measurement, potential improvement for SCell activation procedures, etc.

Additionally, in RRC_CONNECTED mode, a cell DTX/DRX method including alignment of cell DTX/DRX and UE DRX and exchange of information between nodes for cell DTX/DRX can be applied.

Additionally, CSI and beam management related procedures including signal transmission that enables efficient adaptation of measurement and reporting, and spatial elements (e.g., antenna ports, active receiver chains, etc.) may be applied. Also, CSI related procedures including measurement and reporting, and signal transmission that enable efficient adaptation of power offset values between PDSCH and CSI-RS may be applied. Here, the object may be a UE-specific channel/signal, but is not limited thereto, and legacy UE CSI/CSI-RS capabilities may be applied considering the total number of CSI reporting and requirements.

Additionally, methods to prevent legacy UE camping in cells where NES is applied, an enhanced conditional handover (CHO) procedure when the source/target cell is in NES mode, a node-to-node beam activation method that proposes paging in a limited area, and RRM/RF core requirements methods may be applied.

A base station may perform operations to control the state (e.g., on/off) related to transmission and reception during a certain duration in the time axis for NES purposes, control the transmission and reception resources for terminal-common or terminal-specific signals/channels, change the amount of resources in the frequency axis, control the transmission power, or turn on/off the antenna port or TRP in the spatial domain. In describing the present disclosure, the state to which the above-described operation of the base station (hereinafter, NES operation (or NES technique)) is applied will be referred to as the NES mode or NES state.

The base station may indicate/configure the UE according to the NES mode (or NES mode group) that is actually applied among the NES operation(s) described above (Method 1). Additionally or alternatively, the base station may pre-configure the NES operation (or NES mode group) corresponding to the code-point of a specific indicator to the UE (Method 2). In this case, the specific indicator may include an indicator indicated via DCI or MAC CE (etc.) and/or an indicator configured by higher layer signaling.

In the case of method 1, if at least one NES operation is applied to the UE, the state of the UE may be defined as an NES mode or an NES state. As another example, depending on the NES operation applied to the terminal, the UE may be defined as being in a different NES mode or a different NES state.

For example, assume that there is an indicator (e.g., a 1-bit indicator) associated with an NES operation according to method 2. If the UE is associated with one or more NES operations and the value of the indicator is set to "1", d may mean that the state of the terminal is NES mode or NES state. For another example, if the value of the indicator is set to "0", this may mean that there is no NES operation applied to the UE.

As another example, assume that there is an indicator (e.g., a 2-bit indicator) related to NES operations according to method 2. If the value of the indicator (e.g., a code point) is "00", it may mean that there is no NES operation applied to the terminal. If the value of the indicator is "01", "10", or "11", it may mean that one or more NES operations applied to/interacted with the UE are "NES_Operation A", "NES_Operation B", or "NES_Operation C", respectively. And, if the value of the indicator is "01", "10", or "11", it may mean that the terminal is "NES State #1", "NES State #2", or "NES State #3", respectively. That is, for each code point according to the indicator, whether the UE is in an NES state and/or information about the UE's NES state, etc., may be indicated/configured.

Additionally or alternatively, the base station may turn specific spatial elements on/off for NES and adjust power values for downlink signals/channels. Here, the spatial elements may mean or correspond to antenna port(s), active transceiver chain, panel or TRP, etc.

To dynamically apply/indicate various NES operations/techniques in the spatial and power domains, the base station may link CSI-RS resources (sets) with different antenna ports to a single CSI report configuration (e.g., "CSI-ReportConfig") or link multiple power offsets (e.g., power offset between PDSCH and CSI-RS (e.g., "powerControlOffset" parameter), power offset between SSS and CSI-RS (e.g., "powerControlOffsetSS" parameter, etc.).

Specifically, at least one CSI framework described below may be applied.

A plurality of CSI-RS resource sets may be linked for one or more channel measurement resources (CMR) or one or more interference measurement resources (IMR) within the CSI framework #1: "CSI-ReportConfig" configuration. For example, CSI-RS resource set #1 and CSI-RS resource set #2 may be linked for a CMR. Also, the CSI-RS resources included in CSI-RS resource set #1 may have 16 antenna ports configured, and the CSI-RS resources included in CSI-RS resource set #2 may have 8 antenna ports.

CSI Framework #2: If there is a set of CSI-RS resources linked to one or more CMRs or one or more IMRs within the "CSI-ReportConfig" configuration, the CSI-RS resource set may include one or more CSI-RS resources with different attributes (e.g., number of antenna ports and/or power offset). For example, 16 antenna ports may be configured (or power offset #1 value may be configured) for CSI-RS resource #1 included in the set of CSI-RS resources #1 configured as a CMR, and 8 antenna ports may be configured (or power offset #2 value may be configured) for CSI-RS resource #2 included in the same CSI-RS resource set.

CSI Framework #3: If there is a set of CSI-RS resources linked to one or more CMRs or one or more IMRs within the "CSI-ReportConfig", the number of antenna ports and/or power offsets, etc., may be configured for some or all of the CSI-RS resources within the CSI-RS resource set. For example, up to 16 antenna ports may be configured for CSI-RS resource #1 included in the CSI-RS resource set #1 configured as CMR, and a CSI report may be configured in which at least one of the antenna ports is utilized. As another example, multiple power offset values may be configured for CSI-RS resource #2 included in the same CSI-RS resource set, and a CSI report may be configured in which all or some of the multiple power offset values are utilized.

Here, CMR can be configured by parameters related to resources for channel measurement, and IMR can be configured by parameters related to CSI-IM or NZP-CSI-RS for interference.

Under at least one of the above-described CSI frameworks, a CSI reporting method can be established/defined through at least one of the options described below.

Option #1: CSIs based on the number of a plurality of antenna ports and/or multiple power offset values configured in a single CSI report may all be included in a single CSI report. As another example, CSIs based on the number of plurality of antenna ports and/or multiple power offsets may be included in a single CSI report through the configuration/instruction of a base station. In this case, the number of antenna ports and/or power offset values configured/indicated through the base station may be part of the number of antenna ports and/or power offset values configured in the CSI report.

Option #2: Even if the number of the plurality of antenna ports and/or multiple power offset values are configured in a single CSI report, CSIs based on a single number of antenna ports and/or a single power offset may be included in a single CSI report through the base station's configurations/indications.

Option #3: Even if the number of the plurality of APs and/or multiple power offset values are configured in a single CSI report, CSIs based on some antenna port numbers and/or some power offsets may be included in a single CSI report through the UE's judgment/decision (based on criteria that the base station has configured in advance or predefined).

For example, L (>1) sub-configurations may be configured/included within the "CSI-ReportConfig" configuration, and each sub-configuration may correspond to a single spatial or power domain adaptation pattern.

Here, the CSI-RS power value is determined by a parameter (e.g., "powerControlOffsetSS") related to the power offset value between SSS and CSI-RS. When some antenna elements corresponding to one antenna port are turned off, this can affect the CSI-RS power value. Thus, the spatial domain adaptation pattern may correspond to a specific number of antenna ports (or antenna port on/off pattern) or to a specific CSI-RS power value.

For example, assume a case where CSI framework #2 is applied. When the number of A1 antenna ports (or P1 power value) is configured for CSI-RS index #n1 included in the CSI resource set and the number of A2 antenna ports (or P2 power value) is configured for CSI-RS index #n2 included in the same CSI-RS resource set, sub-configuration index #s1 can be configured to be linked to CSI-RS index #n1 and sub-configuration index #s2 can be configured to be linked to CSI-RS index #n2. Accordingly, the spatial domain adaptation pattern can be configured differently for each sub-configuration.

For example, assume that CSI framework #3 is applied. When the number of A1 antenna ports (or P1/P2 power values) is set for CSI-RS index #n1 included in the CSI resource set, the number of A1 antenna ports (or P1 power values or delta 11 from P1 power values) may be linked to the sub-configuration index #s1, and the number of A2 antenna ports (or P2 power values or delta 2 from P1 power values) that make up the CSI-RS index #n1 may be linked to the sub-configuration index #s2. Accordingly, the spatial domain adaptation pattern may be configured differently for each sub-configuration. In addition, the spatial domain adaptation pattern may mean that the power offset value (e.g., a power offset value determined by parameters related to the power offset between PDSCH and CSI-RS or/and parameters related to the power offset between SSS and CSI-RS, etc.) may be varied.

For example, assume that CSI Framework #2 is applied. When a power value of P1 is configured for CSI-RS index #n1 included in the CSI resource set and a power value of P2 is configured for CSI-RS index #n2 included in the same CSI-RS resource set, CSI-RS index #n1 can be linked to sub-set index #s1 and CSI-RS index #n2 can be linked to sub-set index #s2. Accordingly, the power domain adaptation pattern can be configured differently for each sub-configuration.

For example, assume that CSI framework #3 is applied. When a P1 power value (and P2 power value) is configured for a CSI-RS index #n1 included in the CSI resource set, the P1 power value may be linked to a sub-set index #s1, and the P2 power value (or delta from the P1 power value) may be linked to a sub-configuration index #s2. A different power domain adaptation pattern may be configured for each sub-configuration. The UE may feed back to the base station a CSI report consisting of CSI information corresponding to N (a value of N greater than or equal to L) of the L sub-configurations (depending on one of the methods of options #1/#2/#3).

That is, one or more sub-configurations may be included within a single CSI report set, and each sub-configuration may include at least one of i) a list of IDs of one or more CSI-RS resource(s), ii) an antenna port sub-configuration indication consisting of a bitmap, and iii) an additional power offset delta from the PDSCH and CSI-RS EPRE offset set within the CSI-RS resource set.

In describing the present disclosure, a CSI reporting configuration including a sub-configuration with a list of IDs of one or more CSI-RS resource(s) is referred to as a Type 2 SD (spatial domain) adaptation. A CSI reporting configuration including a sub-configuration with an antenna port subset indication configured as a bitmap is referred to as a Type 1 SD adaptation. A CSI reporting configuration including a sub-configuration with an additional power offset delta value is referred to as a PD (power domain) adaptation.

For one CSI reporting configuration, a list of IDs of one or more CSI-RS resource(s) and/or power offset delta values may be configured for the sub-configuration(s) included in one CSI reporting configuration, which is referred to as "Type 2 SD + PD adaptation". For one CSI reporting configuration, an antenna port sub-configuration indication configured as a bitmap and/or power offset delta values may be configured for the sub-configuration(s) included in one CSI reporting configuration, which is referred to as "Type 1 SD + PD adaptation".

For Type 1 SD, PD, or "Type 1 SD + PD adaptation" each CSI-RS resource can be linked to each of all sub-configurations configured within a single CSI reporting configuration. For Type 2 SD, each CSI-RS resource can be linked to only one of the multiple sub-configurations within a single CSI reporting configuration.

In the case of "Type 2 SD + PD adaptation," List #1 of CSI-RS resource(s) configured in a specific sub-configuration within the same CSI reporting configuration and List #2 of CSI-RS resource(s) set in a different sub-configuration may be identical or disjoint.

As another example, when L sub-configurations are configured within a single CSI reporting configuration, the UE may report CSI information corresponding to each of the L sub-configurations to the base station via a single PUSCH/PUCCH. Only N (N value greater than or equal to L) of the L sub-configurations can be activated or triggered via MAC-CE or DCI. In this case, the UE may report CSI information corresponding to each of the N sub-configurations to the base station via a single PUSCH/PUCCH.

Specifically, for a CSI reporting configuration configured with semi-static CSI reporting via PUCCH, N sub-configuration(s) of L sub- configurations configured via MAC-CE may be activated. For a CSI reporting configuration configured with semi-static CSI reporting or non-periodic CSI reporting via PUSCH, N sub- configuration(s) of L sub-configurations configured via DCI may be triggered.

### On-demand SSB transmission and reception method for NES

From the perspective of a base station operating multiple frequency bands, even if the number of UEs being serviced is small or the traffic load is relatively low, the amount of energy consumed due to the periodic transmission of SSB and/or system information can be large.

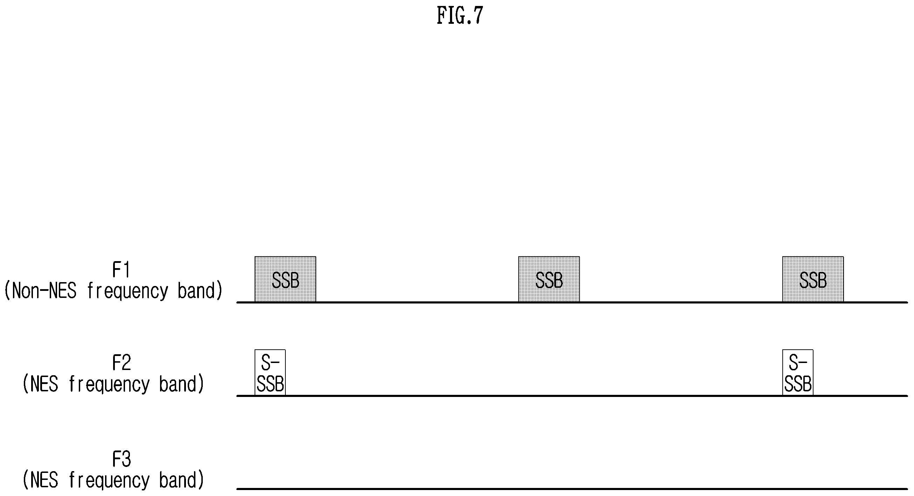

For example, as illustrated in FIG. 7, energy saving can be achieved if a base station operating three frequency bands periodically transmits (legacy) SSB only in some frequency bands (e.g., F1) and transmits simplified (or modified) S(simplified)-SSB or does not transmit SSB in other frequency bands (e.g., F2 or/and F3). In describing the present disclosure, frequency bands may be replaced with bands, carriers, serving cells, or BWPs, etc.

A UE operating in F2 or F3 may request an SSB transmission from a base station in the corresponding frequency band. For the purposes of describing this disclosure, an SSB transmitted by a base station in response to a request from a terminal is referred to as an on-demand SSB. The on-demand SSB may include a legacy SSB or/and a simplified (or modified) S-SSB. And, a cell in which no SSB is transmitted or an S-SSB can be transmitted, such as in F2 or F3 of FIG. 7, is referred to as an SSB-less cell. An SSB-less cell may be a PCell, a PScell (Primary Secondary Cell), or a SCell from the perspective of the UE.

Below, configuration information and related procedures for operating an on-demand SSB in a cell without an SSB will be described. In this disclosure, '/' may mean 'and', 'or', or 'and/or' depending on the context.

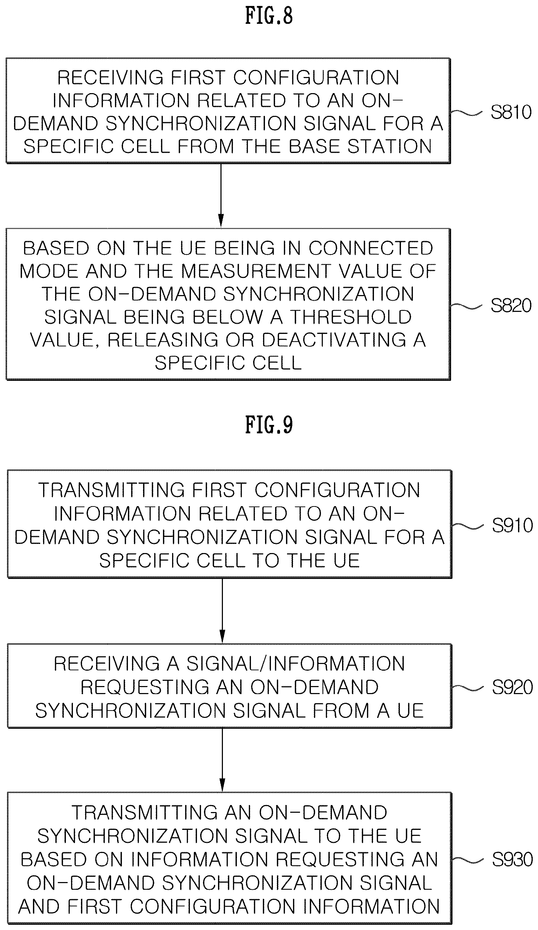

FIG. 8 is a flowchart for explaining the operation of a UE in a wireless communication system according to one embodiment of the present disclosure.

The UE may receive first configuration information related to an on-demand synchronization signal (e.g., SSB, etc.) for a specific cell from the base station (S810).

Here, the UE may receive the first configuration information from the base station via control signals (e.g., system information, RRC, MAC-CE or/and DCI). For example, if a specific cell is a secondary cell (SCell), the UE may receive the first configuration information via the primary cell/special cell, but is not limited thereto, and may receive the first configuration information via the specific cell.

For example, based on a specific cell being a SCell, the first configuration information may be included in control information (e.g., RRC, MAC-CE, DCI, etc.) for adding or configuring at least one secondary cell. That is, while adding/configuring a specific cell, the base station may transmit the first configuration information for an on-demand synchronization signal associated with the specific cell to the terminal.

For example, the first configuration information may include at least one of information about a specific time interval during which an on-demand synchronization signal is transmitted, the transmission period of the on-demand SSB, the pattern information of the on-demand SSB, the power value of the on-demand SSB, or the frequency information of the on-demand SSB.

Additionally or alternatively, the first configuration information may include information indicating that a specific cell is a cell in which an on-demand SSB is transmitted and received (e.g., an SSB-less cell). Additionally, the UE may receive configuration information, etc., for configuring a reference cell corresponding to the SSB-less cell. Accordingly, the UE may perform timing synchronization and path loss measurement, etc., based on the reference cell.

The UE may transmit information requesting an on-demand synchronization signal to the base station via uplink control information according to the first configuration information. For example, the UE may transmit information requesting an on-demand synchronization signal to the base station via a specific cell or another cell (e.g., a primary cell if the specific cell is a secondary cell). Here, the index of the on-demand synchronization signal may be mapped to information requesting an on-demand synchronization signal (or, uplink resources containing the on-demand synchronization signal, etc.).

As an example of the present disclosure, based on the UE being in connected mode and the measurement value of the on-demand synchronization signal being below a threshold value, the UE may release or deactivate a specific cell (S820).

Here, the measurement value of the on-demand synchronization signal may include, but is not limited to, the RSRP, RSRQ, or RSSI of the on-demand synchronization signal. The measurement value of the on-demand synchronization signal may include a value indicating the quality or strength of the on-demand synchronization signal.

Specifically, the UE may receive an on-demand synchronization signal from a base station (through a specific cell) based on information requesting an on-demand synchronization signal. For example, the UE may receive an on-demand synchronization signal from a base station in a specific cell based on first configuration information (e.g., information about a specific time interval during which the on-demand synchronization signal is transmitted, the transmission period of the synchronization signal, the pattern information of the synchronization signal, the power value of the synchronization signal, or the frequency information of the synchronization signal). Here, the UE may release or deactivate the specific cell based on the UE being in connected mode and the measurement value of the on-demand synchronization signal being below a threshold value.

In describing the present disclosure, the fact that the measurement value of the on-demand synchronization signal is below a threshold value may include cases where the on-demand synchronization signal is not transmitted from the base station to the UE.

As another example of the present disclosure, a UE may be determined/interpreted/assumed by the UE that a specific cell is barred based on the UE being in idle mode or inactive mode and the measurement value of the on-demand synchronization signal being below the threshold value.

For example, a specific cell may be determined/interpreted/assumed to be barred for a certain period of time based on the UE being in idle mode or inactive mode and the measurement value of the on-demand synchronization signal being below a threshold value. Here, the UE may not perform operations related to the on-demand synchronization signal (i.e., additional on-demand synchronization signal request operations and reception operations, etc.) for a certain period of time. And, the certain period of time may be predefined or configured by second configuration information transmitted by the base station.

Additionally or alternatively, based on the a beam failure being detected for an on-demand synchronization signal, a specific cell may be released, deactivated, or barred by the UE. And, the UE may transmit information related to the beam failure to the base station. The information related to the beam failure may include at least one of the ID (identity) information of the specific cell, information related to the reference signal associated with the specific cell, or information related to the on-demand SSB.

The method described in the example of FIG. 8 can be performed by the first device (100) of FIG. 1. For example, one or more processors (102) of the first device (100) of FIG. 1 can transmit first configuration information related to an on-demand synchronization signal for a specific cell to a base station through one or more transceivers (106). One or more processors (102) can release or deactivate a specific cell based on whether the UE is in connected mode and the measured value of the on-demand synchronization signal is below a threshold value.

Furthermore, one or more memories (104) of the first device (100) may store instructions for performing the method described in the example of FIG. 8 or the examples described below when executed by one or more processors (102).

FIG. 9 is a flowchart for describing the operation of a base station in a wireless communication system according to one embodiment of the present disclosure.

The base station may transmit first configuration information related to an on-demand synchronization signal for a specific cell to the UE (S910). For example, the base station may transmit the first configuration information to the terminal through various control information (e.g., system information, RRC, MAC-CE, DCI, etc.). Additionally or alternatively, the base station may transmit configuration information for a reference cell corresponding to a specific cell (e.g., an SSB-less cell or a cell where an on-demand SSB is operated) to the base station.

The base station may receive a signal/information requesting an on-demand synchronization signal from a UE (S920).

The base station may transmit an on-demand synchronization signal to the UE based on information requesting an on-demand synchronization signal and first configuration information (S930).

In this case, a specific cell may be released or deactivated based on the UE being in connected mode and the measurement value of the on-demand synchronization signal being below a threshold. As another example, a specific cell may be determined to be prohibited based on the terminal being in idle mode or inactive mode and the measurement value of the on-demand synchronization signal being below a threshold.

The method described in the example of FIG. 9 can be performed by the second device (200) of FIG. 1. For example, one or more processors (202) of the second device (200) of FIG. 1 can transmit first configuration information related to an on-demand synchronization signal for a specific cell to a UE through one or more transceivers (206). One or more processors (202) can receive a signal/information requesting an on-demand synchronization signal from a UE through one or more transceivers (206). One or more processors (202) can transmit an on-demand synchronization signal to a UE through one or more transceivers (206) based on the information requesting an on-demand synchronization signal and the first configuration information.

Furthermore, one or more memories (204) of the second device (200) may store instructions for performing the method described in the example of FIG. 9 or the examples described below when executed by one or more processors (202).

Hereinafter, the operating procedures for an on-demand SSB in a cell without an SSB, a method for determining wireless link failure based on the measurement results of a specific reference signal, and a RACH method for a second cell/TRP are described in detail.

As an example of the present disclosure, a UE in RRC_IDLE or/and RRC_INACTIVE mode may determine a first cell as a serving cell through cell (re)selection and obtain system information from the first cell. A UE in RRC_CONNECTED mode may obtain system information from the first cell or obtain system information through DCI, MAC CE, or UE-dedicated messages transmitted by the base station.

The UE may confirm that the second cell or the second TRP is operating as an SSB-less cell or SSB-less TRP through the acquired system information of the first cell (e.g., MIB, SIB1, or other SIBs) or through DCI/MAC CE/UE-dedicated messages. Additionally or alternatively, the UE may confirm that the second cell or the second TRP supports operation/configuration related to an on-demand SSB through the acquired system information of the first cell or through DCI/MAC CE/UE-dedicated messages.

Here, an indicator indicating that the second cell/TRP supports SSB-less cell/TRP operation and/or on-demand SSB operation may be included in the system information of the first cell or in the DCI/MAC CE/UE dedicated message. Additionally or alternatively, the system information of the first cell or in the DCI/MAC CE/terminal dedicated message may include an uplink transmission resource (e.g., PRACH resource/preamble) configuring requesting an on-demand SSB for the second cell/TRP. Additionally or alternatively, the system information of the first cell or in the DCI/MAC CE/UE dedicated message may include a reference signal configuring mapped to the second cell/TRP or a reference signal configuring mapped to a specific on-demand SSB of the second cell/TRP or having a QCL relationship.

In describing the present disclosure, the reference signal may be an RS for a first cell/TRP or a second cell/TRP. Additionally or alternatively, the reference signal may be an RS mapped to a specific SSB (or, specific SSB index) of the first cell/TRP or the second cell/TRP. A plurality of reference signals may be composed of a set of RSs, and each RS within the set may be indicated/set/mapped to a different RS index. The different RS indices may be mapped to or connected via a QCL relationship to different SSB indices of the first cell/TRP or the second cell/TRP.

When a reference signal for the second cell/TRP is configured, a UE supporting NES may perform a Layer 1 or Layer 3 based measurement based on the reference signal. In this case, the reference signal may be an SSB of the first cell/TRP or the second cell/TRP, a CSI-RS, or a separate new RS. In this case, the UE may trigger the measurement described above if it satisfies one or more of the following conditions.
Condition 1: Condition regarding whether the UE supports SSB-less cell/TRP operation for NES and/or on-demand SSB operation
Condition 2: Condition regarding whether an RRC release message indicating a transition from RRC_CONNECTED mode to RRC_IDLE or RRC_INACTIVE mode configures/indicates the measurement
Condition 3: Condition regarding whether system information obtained from the UE's serving cell(s) configures/indicates the measurement
Condition 4: Condition regarding whether the SSB (or CSI-RS) measurement for the first cell/TRP is below a threshold value
Condition 5: Condition regarding whether the frequency priority for the second cell/TRP is higher than the frequency priority for the first cell/TRP
Condition 6: Condition regarding whether the RACH process failed in the first cell/TRP
Condition 7: RLF or beam in the first cell/TRP Condition regarding whether a failure has occurred
Condition 8: Condition regarding whether a command indicating the performance of a measurement according to the method described above has been received from the first cell/TRP (e.g., a command transmitted via an RRC message, MAC CE, or DCI).

The UE may perform an uplink transmission (e.g., PRACH transmission) at the first cell/TRP or the second cell/TRP to request an on-demand SSB for the second cell/TRP according to the uplink transmission resource configurations. Afterward, the UE may receive the on-demand SSB requested by the second cell/TRP. Here, the UE may have a specific uplink transmission resource (e.g., a specific PRACH resource/preamble) mapped to one or more specific on-demand SSB indices, and different uplink transmission resources may be mapped to different on-demand SSB indices. Additionally, a specific uplink transmission resource may be mapped to at least one of MIB, SIB1, SIBx (an integer such that x > 1) or on-demand SSB, and may be configured to request at least one of these.

Additionally or alternatively, the UE may trigger RACH to request an on-demand SSB and request at least one of MIB, SIB1, SIBx (an integer where x > 1), or an on-demand SSB via RACH MSG3 or RACH MSGA. For example, RACH MSG3 or/and RACH MSGA may transmit UCI, MAC CE, or RRC messages. And, the UCI, MAC CE, or RRC message may include an indicator requesting at least one of MIB, SIB1, SIBx (an integer where x > 1), or an on-demand SSB.

For example, a UCI, MAC CE, or RRC message may include an indicator requesting an on-demand SSB or/and an SSB index(s) corresponding to the SSB(s) to be requested. Additionally, a UCI, MAC CE, or RRC message may include at least one of an indicator indicating MIB, an indicator indicating SIB1, an indicator indicating SIB2, and an indicator indicating SIB3. A UCI, MAC CE, or RRC message may include a bitmap consisting of bits for each of the indicators, and a plurality of bit strings may be formed following each indicator.

If at least one of the following conditions is satisfied, the UE may perform an uplink transmission requesting an on-demand SSB.
Condition 1: Condition regarding whether the measured value of the reference signal mapped to the second cell/TRP is higher than the measured value of the reference signal for the first cell/TRP (e.g., the cell defining the SSB) (e.g., whether the difference between the measured value of the reference signal mapped to the second cell/TRP and the reference signal for the first cell/TRP is greater than or equal to the offset value)
Condition 2: Condition regarding whether the measured value of the reference signal mapped to the second cell/TRP is greater than or equal to a threshold value
Condition 3: Condition regarding whether the measured value of the reference signal for the first cell/TRP (e.g., the cell defining the SSB) is less than or equal to a threshold value
Condition 4: Condition regarding whether the frequency of the reference signal mapped to the second cell/TRP or the frequency for the second cell/TRP has a higher priority than the frequency for the first cell/TRP
Condition 5: Whether the second cell/TRP and the first cell/TRP are the same PLMN or Condition regarding whether it is included in an equivalent PLMN
Condition 6: Condition regarding whether the second cell is determined to be a suitable cell for the UE based on system information regarding the second cell/TRP obtained from the first cell/TRP
Condition 7: Condition regarding whether the second cell is determined to be a suitable cell for the UE based on system information regarding the second cell/TRP obtained from the first cell/TRP

The IDLE/INACTIVE UE receives the on-demand SSB, MIB, SIB1, and SIBx for the second cell and can perform a cell reselection operation from the first cell to the second cell.

An IDLE/INACTIVE UE may receive SIB1 to obtain a RACH configuration for a first cell or a second cell, and perform a RACH process on the first cell or the second cell to switch to CONNECTED mode. Here, the PCell or PSCell of the UE may be the first cell or the second cell. Afterward, before and after switching to CONNECTED mode, the UE may additionally set the second cell (or the first cell) as SCell to the first cell (or the second cell) which is the PCell or PSCell.

An IDLE/INACTIVE/CONNECTED UE may request at least one of an on-demand SSB, MIB, SIB1, and SIBx via an uplink transmission and receive the requested data. Additionally or alternatively, the UE may perform a separate uplink transmission to request MIB, SIB1, and SIBx after first requesting an on-demand SSB. Additionally or alternatively, the UE may perform a separate uplink transmission to request SIB1 and SIBx after first requesting an on-demand SSB and MIB.

Accordingly, the UE may receive all of the on-demand SSB, MIB, SIB1, and SIBx at once or sequentially with a single request. As another example, the UE may request and receive the on-demand SSB, MIB, SIB1, and SIBx sequentially, or request and receive only some of the data.

For example, when the second cell is configured to SCell, the UE may request and receive only the on-demand SSB, and if necessary, request and receive the on-demand SSB and MIB simultaneously in a single uplink transmission. For another example, when the second cell is configured to PSCell, the UE may request and receive the on-demand SSB and MIB simultaneously. For another example, when the second cell is configured to PCell, the UE may request the on-demand SSB and MIB/SIB1 simultaneously or sequentially to receive the on-demand SSB and MIB/SIB1, and then request and receive SIBx according to the on-demand SI configuration of SIB1.

In describing the present disclosure, the first cell/TRP and the second cell/TRP may be the same or different. Also, the first TRP and the second TRP may belong to the same or different cells.

### Embodiment 1

Embodiment 1 is a method for determining whether a specific cell/TRP is an SSB-less cell/TRP and/or whether an on-demand SSB is in operation based on the measurement result of a specific reference signal.

The UE may measure reference signal(s) for the first cell/TRP or the second cell/TRP. The UE may determine whether the second cell/TRP is an SSB-less cell/TRP or is operating an on-demand SSB based on whether the measured value of the reference signal(s) (e.g., RSRP, RSRQ, or RSSI) is above or below a specified threshold. If it is determined that the (second cell/TRP) is operating an on-demand SSB, the UE may request an on-demand SSB. If it is determined that the (second cell/TRP) is not operating an on-demand SSB, the UE may not request an on-demand SSB.

Here, the total measurement for the reference signal may be determined as the average of the measurements for each RS index within the RS set constituting the reference signals, or as the average of the measurements for each RS index above a certain level within the RS set, or as the best value (or worst value) for the measurements for each RS index within the RS set. The threshold value may be configured through the system information of the first cell or UE dedicated message. In the case of an IDLE/INACTIVE UE, the UE dedicated message may be an RRC release message.

As an example of the present disclosure, if the total measurement value for a reference signal is greater than or less than a threshold value, the UE may determine that the on-demand SSB for the second cell/TRP is in operation or not in operation for all SSB indices. The UE may perform at least one of the following operations.
- For example, if the measurement value for the reference signal is above a threshold value, the UE may determine that the on-demand SSB for the second cell/TRP is in operation. Therefore, if the on-demand SSB transmission is not detected, the UE may perform an action to request the on-demand SSB. If the on-demand SSB transmission is detected, the UE may not request the on-demand SSB.
- For example, if the measurement value for the reference signal is above a threshold value, the UE may determine that the SSB for the second cell/TRP is being transmitted and that there is no need to request an on-demand SSB.
- For example, if the measurement value for the reference signal is below a threshold value, the UE may determine that the on-demand SSB for the second cell/TRP is not in operation. Therefore, the UE may not request the on-demand SSB.
- For example, if the measurement value for the reference signal is below a threshold value, the UE may determine that the SSB for the second cell/TRP is not currently being transmitted and that an on-demand SSB can be requested.

As another example of the present disclosure, if an individual measurement of a specific RS index is above or below a threshold value, the UE may determine that an on-demand SSB is in operation or not in operation for an SSB index mapped to a specific RS index of a second cell/TRP. The UE may perform at least one of the following operations.
- For example, if the individual measurement value of a specific RS index is above a threshold value, the UE may determine that an on-demand SSB is in operation for the SSB index mapped to the specific RS index of the second cell/TRP. Therefore, if an on-demand SSB transmission is not detected, the UE may request an on-demand SSB for the corresponding SSB index. And, if an on-demand SSB transmission is detected, the UE may not request an on-demand SSB for the corresponding SSB index.
- For example, if the individual measurement value of a specific RS index is above a threshold, the UE may determine that an SSB is being transmitted for an SSB index mapped to a specific RS index of the second cell/TRP, and that there is no need to request an on-demand SSB for that SSB index.
- For example, if the individual measurement value of a specific RS index is below a threshold value, the UE may determine that the on-demand SSB is not in operation for the SSB index mapped to the specific RS index for the second cell/TRP. Therefore, the UE may not request the on-demand SSB for the corresponding SSB index.
- For example, if the individual measurement value of a specific RS index is below a threshold, the UE may determine that the SSB is not currently being transmitted for the SSB index mapped to the specific RS index of the second cell/TRP, and that it can request an on-demand SSB for the SSB index.

As another example of the present disclosure, if the total measurement value is above or below a threshold value, the UE may determine that the SSB for the second cell/TRP is transmitted or not transmitted for all SSB indices. The UE may perform at least one of the following operations.
- For example, if the total measurement value is above a threshold, the UE may determine that the SSB for the second cell/TRP is being transmitted and that there is no need to request an on-demand SSB.
- As another example, if the total measurement is below the threshold value, the UE may determine that the SSB for the second cell/TRP is not being transmitted and can request the on-demand SSB (if the on-demand SSB is configured).

As another example of the present disclosure, if an individual measurement of a specific RS index is above or below a threshold value, the UE may determine that the SSB index mapped to the specific RS index for the second cell/TRP is transmitted or not transmitted. The UE may perform at least one of the following operations.
- For example, if the individual measurement value of a specific RS index is above a threshold value, the UE may determine that the SSB index mapped to the specific RS index for the second cell/TRP is being transmitted. Therefore, the UE may determine that there is no need to request an on-demand SSB for that SSB index.
- For example, if the individual measurement value of a specific RS index is below a threshold value, the UE may determine that the SSB index mapped to the specific RS index for the second cell/TRP is not being transmitted. Therefore, (if an on-demand SSB is configured) the UE may determine that it can request an on-demand SSB for the corresponding SSB index.

A base station that receives an on-demand SSB request from a UE may transmit the corresponding SSB index for the second cell/TRP or the SSB(s) for the entire SSB index to the UE. In this case, the on-demand SSB transmission may be configured to be performed at the resource location where the existing SSB is transmitted or at a separate occasion.

### Embodiment 2

Embodiment 2 is a method for determining RLF based on the measurement result of a specific reference signal.

When the first cell is PCell (or PSCell) and the second cell is set to SCell, the UE may perform RLM based on the reference signal or the SSB/CSI-RS of the second cell. The UE may perform at least one of the following operations.
- For example, if the RS for RLM is not configured in the first cell, the UE may perform RLM based on the SSB/CSI-RS of the first cell. If the SSB of the first cell is in the DTX inactive duration, the UE may perform RLM for the first cell based on the reference signal or the SSB/CSI-RS of the second cell.
- For example, if the RS for RLM is configured or not configured in the first cell, and the activation BWP of the first cell does not include the SSB/CSI-RS or the RS for RLM of the first cell, the UE may perform RLM for the first cell based on the reference signal or the SSB/CSI-RS of the second cell.
- When an RS for RLM is configured in the first cell, if both the RS for RLM and the SSB/CSI-RS of the first cell are in the DTX inactive duration for NES, the UE may perform RLM for the first cell based on the reference signal or the SSB/CSI-RS of the second cell only during the DTX inactive duration. Here, when the RS for RLM or the SSB of the first cell is in the DTX active duration, the UE may perform RLM for the first cell based on the RS for RLM for the first cell or the SSB/CSI-RS of the first cell. As another example, when a DTX active/inactive operation is configured in the first cell, the UE may perform RLM for the first cell only based on the reference signal or the SSB/CSI-RS of the second cell regardless of the DTX active/inactive duration.

As another example of the present disclosure, if the second cell is PCell (or PSCell) and the first cell is configured to SCell, the UE may perform RLM based on the reference signal or the SSB/CSI-RS of the first cell. The UE may perform at least one of the following operations.
- If the RS for RLM is not configured in the second cell, the UE may perform RLM based on the SSB/CSI-RS of the second cell. If the SSB/CSI-RS of the second cell is in the DTX inactive duration, the UE may perform RLM for the second cell based on the reference signal or the SSB/CSI-RS of the first cell.
- If the RS for RLM is configured in the second cell or is not configured, and the active BWP of the second cell does not include the SSB/CSI-RS of the second cell or the RS for RLM, the UE may perform RLM for the second cell based on the reference signal or the SSB/CSI-RS of the first cell.
- When the RS for RLM is configured in the second cell, if both the RS for RLM and the SSB/CSI-RS of the second cell are in the DTX inactive duration for NES, the UE may perform RLM for the second cell based on the reference signal or the SSB/CSI-RS of the first cell only during the DTX inactive duration. Here, if the RS for RLM or the SSB of the second cell is in the DTX active duration, the UE may perform RLM for the second cell based on the RS for RLM for the second cell or the SSB/CSI-RS of the second cell. As another example, if the RS for RLM is configured to DTX active/inactive operation, the UE may perform RLM for the second cell based only on the reference signal or the SSB/CSI-RS of the first cell regardless of the DTX active/inactive duration.

### Embodiment 3

Embodiment 3 is related to an error handling method when an on-demand SSB for the second cell/TRP is not received.

The UE may perform an uplink transmission (e.g., PRACH transmission) at the first cell/TRP or the second cell/TRP to request an on-demand SSB for the second cell/TRP according to the uplink transmission resource configurations. Afterward, the UE may receive the on-demand SSB requested by the second cell/TRP.

Here, a specific uplink transport resource (e.g., a specific PRACH resource and/or preamble) may be mapped to one or more specific SSB indices, and different uplink transport resources may be mapped to different SSB indices. Additionally, a specific uplink transport resource may be mapped to at least one of MIB, SIB1, SIBx (an integer such that x > 1), and SSB in demand, and may be configured to request at least one of MIB, SIB1, SIBx, and SSB in demand.

The UE may receive an on-demand SSB based on an uplink transmission resource transmitted. i) if an on-demand SSB is not received for a certain period of time (continuously or N times) after an uplink transmission resource, or if the SSB measurement value is below a threshold, ii) if an on-demand SSB is not received N times (continuously or over a certain period of time) during occasions after an uplink transmission resource where an on-demand SSB can be transmitted, or if the SSB measurement value is below a threshold value (continuously every time, N times, non-continuously N times, or on average), iii) if a beam failure is detected for an on-demand SSB, iv) if a beam failure is detected for a second cell/TRP for an on-demand SSB, the UE may perform at least one of the following operations.
- For example, an IDLE/INACTIVE UE (e.g., a UE in the RRC_INACTIVE or RRC_IDLE state) may determine that the second cell is barred for a certain period of time.
- For example, an IDLE/INACTIVE/CONNECTED UE (e.g., a UE in the RRC_INACTIVE, RRC_IDLE or RRC_CONNECTED state) may determine that the second cell or TRP is off (for a certain period of time).
- An IDLE/INACTIVE/CONNECTED UE may release or deactivate the reference signal for the second cell or TRP.
- An IDLE/INACTIVE UE may re-perform uplink transmission to the on-demand SSB according to the uplink transmission resource configurations.
- A CONNECTED UE may release or deactivate the second cell or the second TRP.
- A CONNECTED UE may report to the base station the release, deactivation, RLF, or/and beam failure of the second cell or the second TRP.
- A CONNECTED UE may request the base station to release or deactivate the second cell or the second TRP.
- The message that the UE reports or requests to the base station may include an RRC message, MAC CE, or UCI. In this case, the message may include the cell ID of the second cell, the TRP ID of the second TRP, and the index/ID of the reference signal associated with the second cell/TRP.

### Embodiment 4

Embodiment 4 relates to a RACH method for a second cell/TRP.

In the present disclosure, the UE may perform RACH for the second cell/TRP. For example, the UE may perform RACH for reasons such as PDCCH order, UL time alignment, SR, or mobility. For another example, the UE may perform RACH to request on-demand SSB or system information for the second cell/TRP. Additionally, if the Beam failure instance indication value for the second cell/TRP is greater than or equal to the maximum value (e.g., if the second cell/TRP is a SCell), the UE may report BSR MAC CE or PUCCH SR, or (e.g., if the second cell/TRP is a PCell/PSCell) trigger RACH.

Here, BSR MAC CE, PUCCH SR, or RACH transmission for the second cell/TRP may be performed in the first cell/TRP, the second cell/TRP, or the third cell/TRP. Additionally, PRACH resource transmission of the first cell/TRP, the second cell/TRP, or the third cell/TRP may be performed for BSR MAC CE transmission. Accordingly, the UE may transmit BSR MAC CE via RACH MSG3 or MSBA messages. Here, the first cell may be PCell/PSCell, and the second and third cells may be SCell. As another example, the second cell may be PCell/PSCell, and the first and third cells may be SCell.

The first TRP, the second TRP, and the third TRP may be the same PCell/PSCell or SCell. As another example, two or more of the first TRP, the second TRP, and the third TRP may belong to the same or different PCell/PSCell or SCell. For this RACH operation, the first cell/TRP or the third cell/TRP may be configured as a reference cell/TRP for the second cell/TRP.

Assume that RACH is triggered to request on-demand SSB or system information for the second cell/TRP, to report/recover a beam failure for the second cell/TRP, or to trigger RACH for reasons such as PDCCH order, UL time alignment, SR, or mobility in the second cell/TRP. In this case, if the PRACH resource of the second cell/TRP is configured, RACH may be performed on the PRACH resource of the second cell/TRP, and if the PRACH resource of the second cell/TRP is not configured, RACH may be performed on the PRACH resource of the first cell/TRP or the third cell/TRP that belongs to the same TAG (timing advance group) as the second cell. As another example, RACH may be performed on the first cell/TRP that is always PCell/PSCell (or designated for RACH).

When performing RACH with the PRACH resource of the second cell/TRP according to the reasons described above, the UE may perform at least one of the operations described below.
- When an SSB (or CSI-RS) for a cell/TRP (e.g., a second cell/TRP) belonging to a PRACH resource is transmitted, the UE may measure the SSB (or CSI-RS) and select and transmit the PRACH resource.
- If an SSB (or CSI-RS) for a cell/TRP (e.g., a second cell/TRP) belonging to a PRACH resource is available but is not being transmitted during a DTX inactive period, the UE may select and transmit the PRACH resource by measuring the SSB (or CSI-RS) of the first cell/TRP or the third cell/TRP or the reference signal of the present disclosure during the DTX inactive duration.
- When an SSB (or CSI-RS) for a cell/TRP (e.g., a second cell/TRP) belonging to a PRACH resource is unavailable and not being transmitted because it is an on-demand SSB or an SSB-less cell/TRP, the UE may select and transmit the PRACH resource by measuring the SSB (or CSI-RS) of the first cell/TRP or the third cell/TRP or the reference signal of the present disclosure.
- For the operations described above, the UE may establish a mapping relationship for the SSB (or CSI-RS) of the second cell/TRP and the SSB (or CSI-RS) of the first cell/TRP or the third cell/TRP by beam index. For example, the base station may configure the SSB index #k of the first cell/TRP or the third cell/TRP and the SSB index #m of the second cell/TRP to be mapped to a QCL relationship and transmit this configuration to the UE via system information or a UE-dedicated message. If the measurement value for the SSB index #k of the first cell/TRP or the third cell/TRP is greater than or equal to a threshold value, the UE may select and transmit a PRACH resource/preamble for the SSB index #m of the second cell/TRP.
- (In the absence of separate mapping configurations) the UE may select a PRACH resource by assuming that the direction of the SSB (or CSI-RS) for the second cell/TRP and the SSB (or CSI-RS) for the first cell/TRP or the third cell/TRP is the same. For example, when the SSB index #k of the second cell/TRP and the SSB index #k of the first cell/TRP or the third cell/TRP are assumed to be in a QCL relationship with each other, if the measurement value for the SSB index #k of the first cell/TRP or the third cell/TRP is greater than or equal to a threshold value, the UE may select and transmit a PRACH resource/preamble for the SSB index #k of the second cell/TRP.

As an example of the present disclosure, when performing RACH with the PRACH resource of the first cell/TRP or the third cell/TRP for reasons such as the second cell/TRP, the UE may perform at least one of the operations described below.
- As an example of the present disclosure, it is assumed that i) there is an SSB (or, CSI-RS) for the second cell/TRP, ii) there is no SSB (or, CSI-RS) for the second cell/TRP but there is an SSB (or, CSI-RS) for the cell/TRP (e.g., 1 or 3) belonging to the PRACH resource, iii) there is an SSB (or, CSI-RS) for the second cell/TRP but there is an SSB (or, CSI-RS) for the cell/TRP (e.g., 1 or 3) belonging to the PRACH resource.
   -- Here, when an SSB (or CSI-RS) for the second cell/TRP is transmitted, the UE may measure the SSB (or CSI-RS) and select and transmit a PRACH resource to the first cell/TRP or the third cell/TRP.
   -- If the SSB (or, CSI-RS) for the second cell/TRP is available but is not being transmitted during the DTX inactive duration, the UE may select and transmit the PRACH resource by measuring the SSB (or, CSI-RS) of the first cell/TRP or the third cell/TRP or the reference signal of the present disclosure during the DTX inactive duration (or always regardless of DTX inactive/active).
   -- If the SSB (or, CSI-RS) for the second cell/TRP is not available and is not being transmitted (because it is an on-demand SSB or an SSB-less cell/TRP), the UE may select and transmit the PRACH resource by measuring the SSB (or, CSI-RS) of the first cell/TRP or the third cell/TRP or the reference signal of the present disclosure.
- For the operations described above, the UE may establish a mapping relationship for the SSB (or CSI-RS) of the second cell/TRP and the SSB (or CSI-RS) of the first cell/TRP or the third cell/TRP by beam index. For example, the base station may configure the SSB index #k of the first cell/TRP or the third cell/TRP and the SSB index #m of the second cell/TRP to map to a QCL relationship and transmit the above-described configuration to the UE via system information or a UE-dedicated message. If the measurement value for the SSB index #k of the second cell/TRP is greater than or equal to a threshold value, the UE may select and transmit a PRACH resource/preamble for the SSB index #m of the first or third cell/TRP.
- (In the absence of separate mapping configurations) the UE may select a PRACH resource by assuming that the direction of the SSB (or CSI-RS) for the second cell/TRP and the SSB (or CSI-RS) for the first cell/TRP or the third cell/TRP is the same. For example, the SSB index #k of the second cell/TRP and the SSB index #k of the first cell/TRP or the third cell/TRP are assumed to be in a QCL relationship with each other, and when the measurement value for the SSB index #k of the second cell/TRP is greater than or equal to a threshold value, the UE may select and transmit a PRACH resource/preamble for the SSB index #k of the first or third cell/TRP.

### Embodiment 5

Embodiment 5 is related to a method for operating an SSB-less cell and an on-demand SSB.

A base station may configure/indicate via RRC message, MAC-CE, or DCI that a specific serving cell is an SSB-less cell and/or a cell running an on-demand SSB (cell-common, cell-specific, UE group-common, or UE-dedicated).

When the UE identifies that a specific serving cell is an SSB-less cell and/or is operating an on-demand SSB through the reception of the configuration/indication, the UE may not expect to receive an SSB through the specific serving cell and may transmit an uplink signal/channel configured for an on-demand SSB for an SSB request from the serving cell.

Characteristically, in the case of a SCell, the information (e.g., information indicating that a specific serving cell is an SSB-less cell and/or a cell operating an on-demand SSB) can be transmitted via RRC signaling and/or SCell activation MAC-CE that configures and/or adds a SCell. For example, a base station may inform a UE via RRC signaling that the SCell is an SSB-less cell and runs an on-demand SSB while configuring and/or adding a SCell.

As another example, a base station may configure and/or add a cell via RRC signaling and set that the cell is an SSB-less cell and may have an on-demand SSB operating. Additionally, the base station may indicate via MAC-CE that the cell is actually an SSB-less cell and/or a cell operating the on-demand SSB.

When an SCell is activated by the signaling described above to configure/indicated the SSB-less cell and/or the on-demand SSB to be operated, the SSB may be transmitted on the SCell for a certain period of time T (the value of T may be predefined or configured by the base station). Additionally or alternatively, whether the SSB is transmitted for a certain period of time T may be predefined, or whether it is transmitted may be explicitly configured/indicated by the RRC signaling or the (SCell activation) MAC-CE.

A reference cell corresponding to an SSB-less cell may need to be configured, and one or more candidates for the reference cell may be configured. Whether the actual cell is the reference cell may be configured/indicated through RRC signaling or MAC-CE (indicating activation) that configures or adds the SSB-less cell.

In one example of the present disclosure, different cells may be linked according to the function of the reference cell. For example, cell #A may be configured/indicated as a reference cell for timing synchronization and AGC setting of an SSB-less cell. Cell #B may be configured/indicated as a reference cell for reference of UL power control (or, path-loss estimation). Cell #C may be configured/indicated as a reference cell for performing RRM measurements instead. Alternatively, multiple reference cells may be configured/indicated for the same function.

For example, when 2 TAs (timing advances) are configured for an SSB-less SCell (e.g., in a multi-TRP situation or in an IAB operation), a reference cell for timing synchronization (and/or AGC setting) corresponding to each TA may be separately configured/indicated.

As another example, the reference cell (and/or the DL signal/channel transmitted from the reference cell) for reference purposes for UL power control (or, path-loss estimation) may be configured differently depending on the UL signal/channel on the SSB-less cell.

As another example, different reference cells (and/or DL signals/channels transmitted from the reference cells) may be configured differently depending on the type of measurement. Specifically, for RSRP, an SSB on cell #1 may be configured as the reference, and for L1-SINR, an SSB on cell 1#2 (or cell #1) or a CSI-RS resource may be configured as the reference.

One or more reference cells may be linked/configured/indicated to a single SSB-less cell. In this case, a priority order may be required for which of the linked reference cells will be used to obtain timing synchronization, AGC setting, UL power control (or path-loss estimation), beam management related measurements, or RRM measurement functions.

The priority order may be explicitly configured/indicated, or the priority order may be determined by the cell index (ascending or descending). As another example, even if the reference cell has a high priority, if the reference cell is inactive or dormant BWP is running, the cell corresponding to the next highest priority may be replaced as the reference cell.

Such priority order may be configured/defined at the signal/channel level rather than the cell level. For example, the PCell's SSB, PCell's CSI-RS (e.g., TRS), and SCell's CSI-RS (e.g., TRS) may be configured for reference purposes regarding timing synchronization (and/or path-loss estimation) of an SSB-less SCell. And, the PCell's SSB may be configured/indicated to have the highest priority and the SCell's CSI-RS to have the lowest priority, or a rule may be established in advance.

A common reference cell may be configured/indicated for multiple SSB-less SCells, and for this purpose, SSB-less SCells may be grouped. For example, when SCell indices #0/1/2 are all configured/indicated as SSB-less SCells and belong to the same group, the reference cell corresponding to the SCells in the same group may be common. Characteristically, when a reference cell is configured/indicated for one SCell among the SCells in the same group, it may mean that the reference cell is automatically set/directed as a reference cell for other SCells in the same group.

Even if a reference cell corresponding to a specific SSB-less SCell (or the group to which the SCell belongs) is not configured, a default reference cell may be determined by a rule. If the SSB-less SCell belongs to the master cell group (MCG), the default reference cell may be PCell. If the SSB-less SCell belongs to the secondary cell group (SCG), the default reference cell may be PSCell.

Additionally or alternatively, if an SSB-less SCell does not belong to the pTAG (primary timing advance group) but to the sTAG (secondary timing advance group), any SCell that belongs to the same sTAG and is not an SSB-less may be the default reference cell. Or, the serving cell with the lowest/highest index of the cell may be the default reference cell.

To minimize system performance degradation caused by the operation of SSB-less cells, SSB-less cell operation may not be allowed for PCells, PSCells, PUCCH-SCells (SCells where PUCCH transmission is configured), or/and PUCCH-sSCells (e.g., SCells where PUCCH is transmitted due to PUCCH cell switching). As another example, SCells configured/directed as reference cells for SSB-less cells may not be allowed to be deactivated or to operate as sleep BWPs.

For an on-demand SSB that can be transmitted over an SSB-less cell, at least one of the information described below may be configured for the UE. At least one of the information described below that is set for the UE may be configured differently for each BWP configured in the SSB-less cell or common to all BWPs.

Multiple candidate values for one of the information described below may be predefined/configured. One of the candidate values may be configured/indicated via RRC signaling to configure/add an SSB-less cell or MAC-CE (for SCell activation).
- Period of on-demand SSB: This may mean the (minimum) time interval during which the same SSB (candidate) index is transmitted. If the period of on-demand SSB is not configured, a default value (e.g., 20 msec) may be predefined, or the SSB period configured in the reference cell may be applied as the period of on-demand SSB on the corresponding SSB-less cell.
- Duration of transmission of on-demand SSB: The duration of transmission of on-demand SSB may refer to the period from when transmission of on-demand SSB begins until it ends on an SSB-less cell. For example, assume a case in an SSB-less cell where on-demand SSB is transmitted P times at a period of X msec starting from slot #n, and then the SSB is turned off and no more transmissions occur starting from slot #n+k. In this case, k slots (or absolute time or P corresponding to k slots) may be defined as the duration.
- Pattern information for on-demand SSB: If the time/frequency structure between legacy SSB and on-demand SSB may differ, information on the pattern of compact/simplified SSB may be configured.
- Power value of on-demand SSB: If path-loss estimation, CSI reporting, etc. are performed through the on-demand SSB, the power value of the SSB may be required. If the power value of the SSB is not set, a predefined default value may be applied, or the SSB power value set in the reference cell may be inherited and applied. Additionally, if the relative EPRE value between the PSS, SSS, or/and PBCH may differ from the existing SSB, that relative EPRE value may also be configured.
- Location of the frequency resource (e.g., center frequency) where the on-demand SSB is transmitted
- Information regarding whether the on-demand SSB is NCD-SSB (non-cell defining-SSB) or CD-SSB (cell defining-SSB)
- If multiple ref-cells can be set for an SSB-less cell, the above-described information corresponding to each ref-cell may be set separately.

Also, as in Example 2, the above-described information may be configured for an SSB transmitted for a certain period T after SCell activation.

Through the above-described embodiments, the UE and the base station may transmit and receive the on-demand SSB. Depending on the measurement results of the on-demand SSB, the cell may be deactivated or released, and accordingly, energy of the UE and the base station may be saved.

### General Device to which the Present Disclosure may be applied

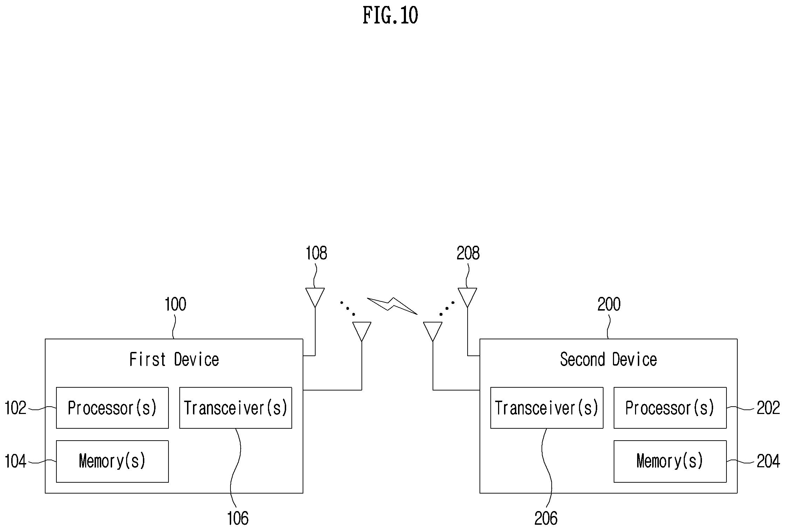

FIG. 10 illustrates a block diagram of a wireless communication device according to an embodiment of the present disclosure.

In reference to FIG. 10, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure.

For example, the processor 102 may process the information in the memory 104 to generate first information/signal and then transmit a wireless signal including the first information/signal through the transceiver 106. Additionally, the processor 102 may receive a wireless signal including the second information/signal through the transceiver 106 and then store information obtained from signal processing of the second information/signal in the memory 104.

A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

### [Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

## Claims

1. A method comprising:
receiving, by a user equipment (UE) from a base station, first configuration information related to an on-demand synchronization signal for a specific cell; and
based on the UE being in a connected mode and a measurement value of an on-demand synchronization signal being below a threshold value, releasing or deactivating, by the UE, the specific cell,
based on the UE being in idle mode or inactive mode and the measurement value of the on-demand synchronization signal being below the threshold value, the specific cell is determined by the UE to be barred.

2. The method of claim 1, wherein:
the first configuration information comprises at least one of information related to a specific time interval during which the on-demand synchronization signal is transmitted, a transmission period of the on-demand synchronization signal, pattern information of the on-demand synchronization signal, a power value of the on-demand synchronization signal, or frequency information of the on-demand synchronization signal.

3. The method of claim 2, wherein:
the first configuration information includes information indicating that the specific cell is a cell to which an on-demand synchronization signal is transmitted and received.

4. The method of claim 1, wherein:
based on the UE being in idle mode or inactive mode and the measurement value of the on-demand synchronization signal being below the threshold value, the specific cell is determined by the UE to be barred for a certain period of time, and
during the certain period of time, no operation related to the on-demand synchronization signal is performed by the UE.

5. The method of claim 4, wherein:
the certain period of the time is predefined or configured by second configuration information transmitted by the base station.

6. The method of claim 1, wherein:
based on the specific cell being a secondary cell, the first configuration information is transmitted from the base station to the UE through control information for adding or configuring at least one secondary cell.

7. The method of claim 1, wherein:
the first configuration information is transmitted from the base station to the UE through a primary cell, and
information requesting the on-demand synchronization signal is transmitted from the UE to the base station through either the primary cell or one of the specific cells.

8. The method of claim 1, wherein:
information requesting the on-demand synchronization signal is transmitted from the UE to the base station via uplink control information, and
an index of the on-demand synchronization signal is mapped to the information requesting the on-demand synchronization signal.

9. The method of claim 1, wherein:
based on a beam failure being detected for the on-demand synchronization signal, the specific cell is released, deactivated, or barred by the UE, and
information related to the beam failure is transmitted from the UE to the base station.

10. The method of claim 9, wherein:
the information related to the beam failure includes at least one of the identity (ID) information of the specific cell, information related to a reference signal associated with the specific cell, or information related to the on-demand synchronization signal.

11. A user equipment (UE) comprising:
at least one transceiver; and
at least one processor coupled to the at least one transceiver;
wherein the at least one processor is configured to:
receive, from a base station through the at least one transceiver, first configuration information related to an on-demand synchronization signal for a specific cell; and
based on the UE being in a connected mode and a measurement value of an on-demand synchronization signal being below a threshold value, release or deactivate the specific cell,
based on the UE being in idle mode or inactive mode and the measurement value of the on-demand synchronization signal being below the threshold value, the specific cell is determined by the UE to be barred.

12. A method comprising:
transmitting, by a base station to a user equipment (UE), first configuration information related to an on-demand synchronization signal for a specific cell;
receiving, by the base station from the UE, information requesting the on-demand synchronization signal; and
transmitting, by the base station to the UE, the on-demand synchronization signal based on the information requesting the on-demand synchronization signal and the first configuration information,
wherein based on the UE being in connected mode and a measurement value of the on-demand synchronization signal being below a threshold, the specific cell is released or deactivated, and
based on the UE being in idle mode or inactive mode and the measurement value of the on-demand synchronization signal being below the threshold, the specific cell is determined to be barred.

13. A base station comprising:
at least one transceiver; and
at least one processor coupled to the at least one transceiver;
wherein the at least one processor is configured to:
receive, from the UE through the at least one transceiver, information requesting the on-demand synchronization signal; and
transmit, to the UE through the at least one transceiver, the on-demand synchronization signal based on the information requesting the on-demand synchronization signal and the first configuration information,
wherein based on the UE being in connected mode and a measurement value of the on-demand synchronization signal being below a threshold, the specific cell is released or deactivated, and
based on the UE being in idle mode or inactive mode and the measurement value of the on-demand synchronization signal being below the threshold, the specific cell is determined to be barred.

14. A processing device configured to control a user equipment (UE) to perform communication in a wireless communication system, the processing device comprising:
at least one processor; and
at least one computer memory operatively coupled to the at least one processor and storing instructions for performing operations upon being executed by the at least one processor,
wherein the operations comprise:
receiving, from a base station, first configuration information related to an on-demand synchronization signal for a specific cell; and
based on the UE being in a connected mode and a measurement value of an on-demand synchronization signal being below a threshold value, releasing or deactivating the specific cell,
based on the UE being in idle mode or inactive mode and the measurement value of the on-demand synchronization signal being below the threshold value, the specific cell is determined by the UE to be barred.

15. At least one non-transitory computer readable medium storing at least one instruction, wherein:
the at least one instruction executed by at least one processor controls a device perform:
receiving, from a base station, first configuration information related to an on-demand synchronization signal for a specific cell; and
based on the UE being in a connected mode and a measurement value of an on-demand synchronization signal being below a threshold value, releasing or deactivating the specific cell,
based on the UE being in idle mode or inactive mode and the measurement value of the on-demand synchronization signal being below the threshold value, the specific cell is determined by the UE to be barred.
